(19) Europäisches Patentamt / European Patent Office / Office européen des brevets

(11) **EP 1 814 252 A1**

(12) **EUROPEAN PATENT APPLICATION**
published in accordance with Art. 158(3) EPC

(43) Date of publication:
**01.08.2007 Bulletin 2007/31**

(51) Int Cl.:
*H04J 13/00* (2006.01)

(21) Application number: **05809639.7**

(86) International application number:
**PCT/JP2005/021669**

(22) Date of filing: **25.11.2005**

(87) International publication number:
**WO 2006/057334 (01.06.2006 Gazette 2006/22)**

(84) Designated Contracting States:
**DE FR GB**

(30) Priority: **25.11.2004 CN 200410095506**

(71) Applicant: **MATSUSHITA ELECTRIC INDUSTRIAL CO., LTD.**
**Osaka 571-8501 (JP)**

(72) Inventors:
• **LI, Haitao**
**c/o Matsushita El.Ind.Co.Ltd**
**Chuo-ku, Osaka 540-6319 (JP)**

• **LI, Jifeng**
**c/o MatsushitanEl.Ind.Co.Ltd.**
**Chuo-ku, Osaka 540-6319 (JP)**

(74) Representative: **Grünecker, Kinkeldey, Stockmair & Schwanhäusser**
**Anwaltssozietät**
**Maximilianstrasse 58**
**80538 München (DE)**

(54) **MULTI-RATE WIRELESS COMMUNICATION APPARATUS AND CODE DISTRIBUTING METHOD**

(57)    A multi-rate wireless communication apparatus wherein a low complexity is exhibited for a problem of code congestion occurring when a system supports an application of a variable multimedia and wherein a dynamic code distribution is performed, thereby significantly reducing the number of re-distributions and hence reducing the system load. In this apparatus, a storing part (101) stores an optimum system code tree. A comparing part (102) determines, upon receipt of a new call, whether the system can accept the new call. A calculating part (103) performs a calculation based on the status of the code tree stored in the storing part (101) and based on a rate (t) required by the new call. A distributing part (104) distributes, based on a calculation result from the calculating part (103), an appropriate code to the new call, and changes, as occasion requires, the distributed code so as to optimize the system code tree, and further causes the storing part (101) to store the code tree as changed.

FIG.3

**Description**

Technical Field

The present invention relates to a multi-rate radio communication apparatus and code distribution method, used, for example, in multi-antenna input/output - orthogonal frequency division multiplexing - code division multiplexing (hereinafter referred to as "MIMO-OFDM-CDM") communication that supports multiple user access and variable-rate multi-media information transmission.

Background Art

The fusion of wireless network with the internet lead to increased demand for the type and quality of radio communication services from users. In order to meet the demand for wireless multi-media and high-rate data transmission, new radio communication systems have to be developed. Among these, a MIMO-OFDM radio transmission technology combining MIMO and OFDM attracts attention, in particular (see, for instance, Non-Patent Document 1, Non-Patent Document 2 and Non-Patent Document 3).

MIMO-OFDM technology combining MIMO and OFDM has advantages from both technologies. That is, by OFDM modulation, the MIMO fading channel, which exhibits frequency selectivity, is broken down into a set of parallel and flat fading channels, and MIMO is used to expand system capacity, which makes this technology suitable for use in multi-media communication activities for transmitting high-speed audio and video. Apart from preventing frequency selectivity, the use of the code division multiplexing (CDM, in other words, encoding) technology makes it possible to achieve frequency diversity (multipath diversity) to improve system performance (for instance, Non-Patent Document 4).

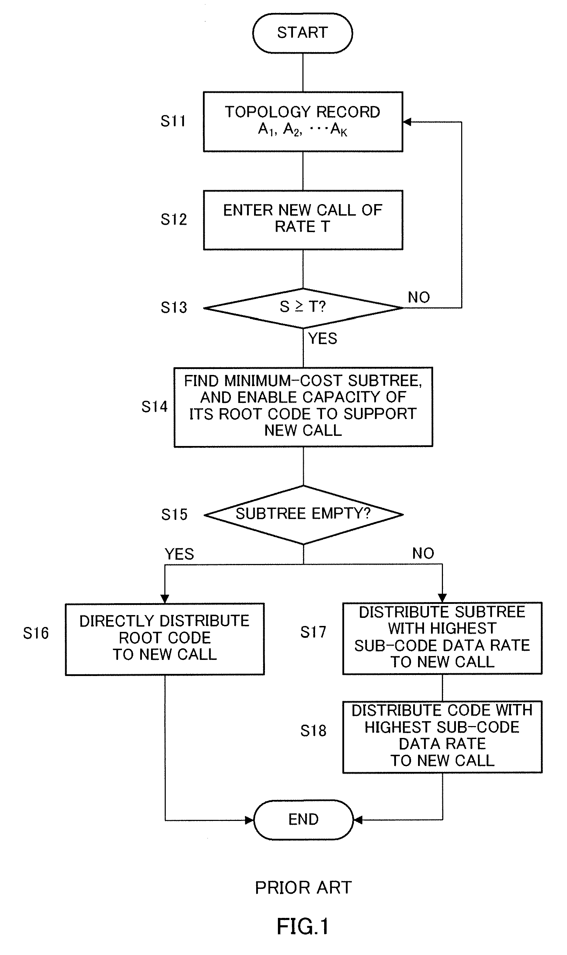

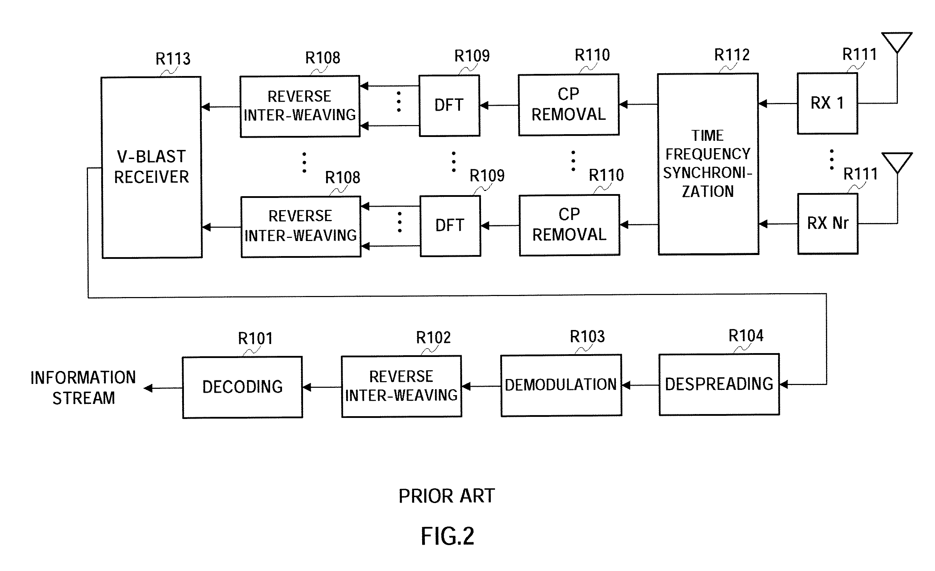

Although the MIMO-OFDM-CDM system proposed in Non-Patent Document 5 can achieve frequency diversity and high-frequency vector efficiency effects simultaneously, this paper investigates only the receiving processing problem in the MIMO-OFDM-CDM system where there is one user and the rate is fixed. If the orthogonal variable spreading factor (OVSF) spreading scheme is used to support activities of varying rates, this makes code blockage more likely since the codes assigned to users must be orthogonal. In order to solve the problem of code blockage, a distribution method based on topology search is proposed in Non-Patent Document 5, in which the key idea is to associate a code function with each candidate subtree, as shown in FIG.1, and to distribute a root code of a minimum-cost subtree to a new call, so that the code is reliably distributed to the minimum-cost subtree. When a new call requests service (S12), the excess system capacity is detected (S13), and when the system can support the call ("YES" in S13), the minimum-cost subtree is searched and the capacity of its root code can support the above-mentioned call (S14). If the minimum-cost subtree is found and the above-mentioned subtree is empty ("YES" in S15), the root code is directly distributed to the above call. If the subtree is not empty, the root code of the sub-code tree with highest sub-code data rate is distributed to the new call (S17). Finally, the code with the highest sub-code data rate in the above-mentioned subtree is redistributed to the new call (S18). FIG.2 is a block diagram showing a configuration of a conventional receiving apparatus.

Although OVSF spreading brings to the MIMO-OFDM-CDM system the advantage of supporting variable rate multi-media activities, it also brings about a disadvantage that its application is condition-constrained. Since the code to be distributed to the users must be orthogonal, code blockage is more likely to occur when activities of different rates are supported. In order to solve this code blockage problem, it is necessary to redistribute codes in such a manner as enable the new call to be supported.

However, since a large volume of code exchange and redistribution operations are conducted in the conventional apparatus, there is a problem that the system has an increased level of complexity.

Non-Patent Document 1: G. J. Foschini, Layered Space-time Architecture for Wireless Communication in a Fading Environment when Using Multi-element Antennas, Bell Labs Tech. J., vol. 1, 1996, pp. 41-59.

Non-Patent Document 2: I. E. Telatar, Capacity of Multi-antenna Gaussian Channels, Eur. Trans. Tel., vol. 10, no. 6, Nov./Dec. 1999, pp. 585-595.

Non-Patent Document 3: A. J. Paularj et al., An Overview of MIMO Communications-A Key to Gigabit Wireless, Proceedings of IEEE, vol. 92, no. 2, Feb. 2004, pp. 198-218

Non-Patent Document 4: S. Kaiser, OFDM code division multiplexing in fading channels, IEEE trans. Comm.., vol. 50, Aug. 2002, pp. 1266-1273.

Non-Patent Document 5: Kilsik Ha and K. B. Lee, OFDM-CDM with V-BLAST Detection and Its Extension to MIMO Systems, in Proc. IEEE Vehicular Technology Conference 2003 Spring (VTC 2003S), Jeju, Korea, vol. 1, pp.764-768, Apr. 2003.

Disclosure of Invention

Problems to be Solved by the Invention

When a system supports variable multimedia applications and the problem of code blockage arises, the present invention aims to provide a multi-rate radio communication apparatus and code distribution method for performing less complicated, dynamic code distribution, so that the number of redistributions is significantly decreased and the load on the system is reduced.

Means for Solving the Problem

A multi-rate radio communication apparatus of the present invention adopts a configuration which includes: a distributing section that modifies a sequence which maintains associations showing occupied codes and unoccupied codes, from codes which are hierarchically associated with each spreading factor in a code tree having a tree configuration, into a sequence in which the occupied codes and the unoccupied codes are split, to obtain an optimal state; a storage section that stores the sequence of the optimal state; and a spreading section that performs spreading processing on transmit data to a new call using a code distributed to the new call, based on the sequence of the optimal state which is stored in the storage section.

A code distribution method of the present invention comprises: a distributing step of modifying a sequence which maintains associations showing occupied codes and unoccupied codes, from codes which are hierarchically associated with each spreading factor in a code tree having a tree configuration, into a sequence in which the occupied codes and the unoccupied codes are split, to obtain an optimal state; a storage step of storing the sequence of the optimal state; and a distributing step of distributing a code to a new call, based on the sequence of the stored optimal state.

Advantageous Effect of the Invention

When a system supports variable multimedia applications and the problem of code blockage arises, the present invention performs less complicated, dynamic code distribution, so that the number of redistributions is significantly decreased and the load on the system is reduced.

Brief Description of Drawings

FIG.1 is a flowchart showing a conventional code distribution method;
FIG.2 is a block diagram showing a configuration of a conventional receiving apparatus;
FIG.3 is a block diagram showing a configuration of a transmitting apparatus according to an embodiment of the present invention;

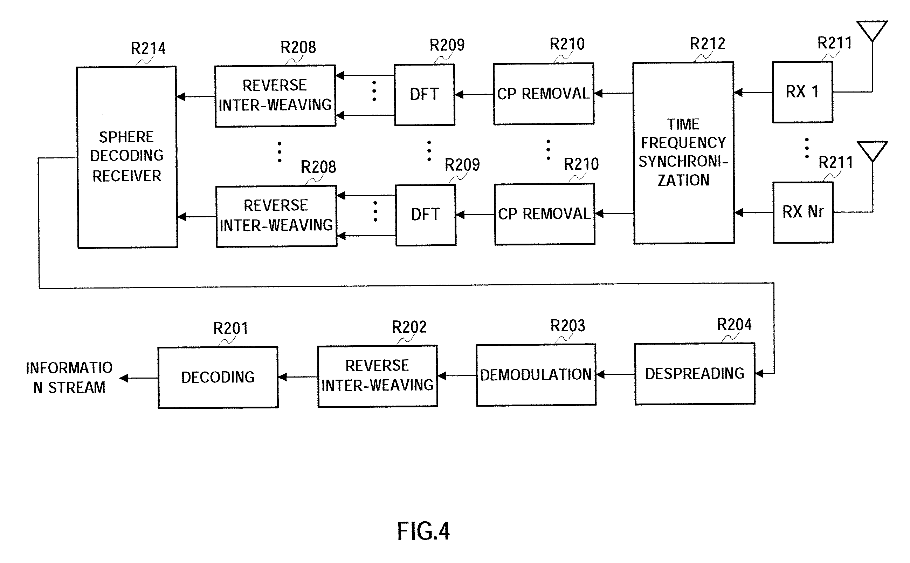

FIG.4 is a block diagram showing a configuration of a receiving apparatus according to an embodiment of the present invention;
FIG.5 shows a code tree according to an embodiment of the present invention;
FIG.6A shows a code tree according to an embodiment of the present invention;
FIG.6B shows a topology notation method according to an embodiment of the present invention;
FIG.7A shows a code tree according to an embodiment of the present invention;
FIG.7B shows a topology notation method according to an embodiment of the present invention;
FIG. 8A shows a code tree according to an embodiment of the present invention;
FIG.8B shows a code tree according to an embodiment of the present invention;
FIG.9A shows a code tree according to an embodiment of the present invention;
FIG.9B shows a code tree according to an embodiment of the present invention;
FIG. 10A shows a code tree according to an embodiment of the present invention;
FIG.10B shows a code tree according to an embodiment of the present invention;
FIG. 11A shows a code tree according to an embodiment of the present invention;
FIG.11B shows a code tree according to an embodiment of the present invention;
FIG.11C shows a code tree according to an embodiment of the present invention;
FIG. 12A shows a code tree according to an embodiment of the present invention;
FIG.12B shows a code tree according to an embodiment of the present invention;

FIG. 12C shows a code tree according to an embodiment of the present invention;

FIG. 13A shows a code tree according to an embodiment of the present invention;

FIG. 13B shows a code tree according to an embodiment of the present invention; and

FIG.14 is a flow chart showing a code distribution method according to an embodiment of the present invention.

Best Mode for Carrying Out the Invention

The present invention provides a dynamic code distribution method, based on the optimal state of a code tree and the E-T (Extended Topology) notation method. The gist of the invention is that, when the system has capacity for accepting a new call, a code is distributed to the new call and the optimal state of the code tree is maintained.

Now, embodiments of the present invention will be described in detail with reference to the accompanying drawings. The embodiments described herein are intended to explain the invention and do not limit the scope of the invention.

(Embodiments)

In the following description, the invention will be explained using a MIMO-OFDM-CDM system as an example of a multi-rate radio communication system. However, the present invention is not limited to this.

According to the present invention, a spreading sequence in which a single orthogonal variable spreading factor (OVSF) is distributed per user is used to bit-spread the information, before entering the step in which the antenna multiplexing is performed on the data stream, to enable the system to support multi-rate multi-media information transmission in the case of multiple-user access. After the inputted bit stream has been subj ected to encoding, inter-weaving, modulation and spreading processing, it is multiplexed to turn it into a plurality of sub-streams. Each sub-stream is converted to a parallel data code which is transmitted to a CDM multiplexer and spread to obtain a sub-stream output signal, and after being further subjected to inter-weaving and OFDM modulation processing, the signal istransmitted. The CDM-processed data code is dispersed into a plurality of subcarriers and transmitted. The code transmitted by each subcarrier is a linear combination of all codes, in place of a single code. Thus, even if deep fading is present in one particular subcarrier, a frequency diversity effect can still be obtained since the transmit signals from the other subcarriers can be restored. By subjecting the signal, at the receiving side, to code synchronization, OFDM modulation, reverse inter-weaving, and, after signal detection, to despreading, demodulation, reverse inter-weaving and decoding processing, the signal is restored to a bit stream. In order to obtain a multi-antenna channel transfer matrix, the present invention proposes that OFDM-CDM deliver a pilot sequence to estimate the pilot signal at the receiving side and carry out AGC, code synchronization and channel estimation, etc. Further, in order to obtain sub-optimum channel capacity at the receiving side, the invention proposes to use the receiving processing scheme of sphere decoding.

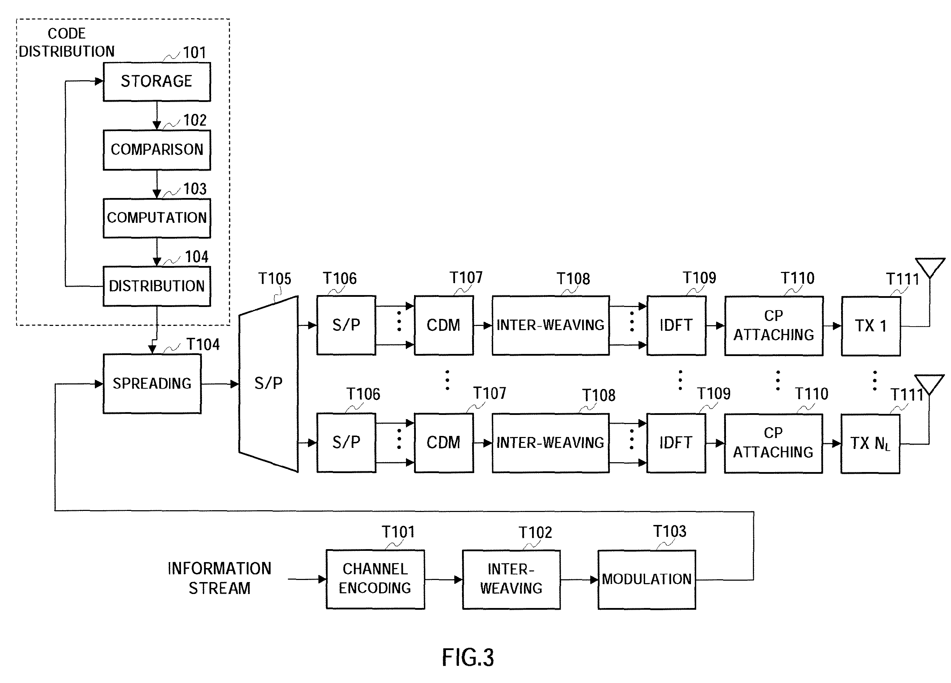

FIG. 3 is a block diagram of a MIMO-OFDM-CDM system equipped with $N_L$ transmit antennas. After the inputted bit stream is encoded by channel encoding section T101, inter-weaved by inter-weaving section T102 and modulated by modulating section T103, it is multiplexed and turned into $N_L$ sub-streams. Then, the $N_L$ sub-streams are converted to P parallel data codes in S/P section T105, the converted parallel data codes are transmitted to CDM multiplexer T107 to be spread and multiplexed, and $n_f$ sub-stream output signals as shown in equation 1 are obtained.

$$\mathbf{y}_{n_t} = \mathbf{S}_P \mathbf{x}_{n_t} \qquad \cdots (\text{Equation 1})$$

where

$$\mathbf{y}_{n_t} = \begin{bmatrix} y_{n_t}^1 & y_{n_t}^2 & \cdots & y_{n_t}^P \end{bmatrix}^T \quad \text{is the } n_t \text{ sub-stream output signal,}$$

$$\mathbf{x}_{n_t} = \begin{bmatrix} x_{n_t}^1 & x_{n_t}^2 & \cdots & x_{n_t}^P \end{bmatrix}^T \quad \text{is P parallel data code, and}$$

$\mathbf{S}_P$ is P*PCDM conversion array (for instance, Hadamard array).

In equation 1, all sequences are orthogonal spreading code sequences. In equation 1, sub-stream output signal $n_f$ is inter-weaved by inter-weaving section T108, OFDM modulated by IDFT section T109 and CP attaching section T110, and is transmitted from antenna $n_t$ (T111). The CDM-processed data codes are dispersed to a plurality of subcarriers, and a linear combination of the respective codes is transmitted. Thus, even if deep fading is present in any one subcarrier, a frequency diversity effect can still be obtained since the transmit signals from the other subcarriers can be restored.

At the receiving side, the receive signal is subjected to code synchronization in time frequency synchronizing section R212, OFDM modulation in CP removing section R210 and DFT section R209, data reverse inter-weaving in reverse inter-weaving section R208, signal detecting in sphere decoding receiver R214, demodulation in demodulating section R203, reverse inter-weaving in reverse inter-weaving section R202, and further to decoding processing in decoding section R201, whereby it is restored to bit-stream. The $N_r$-th antenna receive signal is shown by equation (2).

$$\mathbf{r}_{n_r} = \sum_{n_t=1}^{N_t} \mathbf{H}_{n_r n_t} \mathbf{S}_P \mathbf{x}_{n_t} + \mathbf{w}_{n_r} \qquad (\text{Equation 2})$$

where

$\mathbf{r}_{n_r} = \begin{bmatrix} r_{n_r}^1 & r_{n_r}^2 & \cdots & r_{n_r}^P \end{bmatrix}^T$ is the $N_r$-th antenna receive signal,

$\mathbf{H}_{n_r n_t} = diag\begin{pmatrix} h_{n_r n_t}^1, & h_{n_r n_t}^2, & \cdots, & h_{n_r n_t}^P \end{pmatrix}$ is the channel gain matrix,

$\mathbf{w}_{n_r} = \begin{bmatrix} w_{n_r}^1 & w_{n_r}^2 & \cdots & w_{n_r}^P \end{bmatrix}^T$ is the noise vector,

$\mathbf{S}_P$ is P*PCDM conversion array (for instance, Hadamard array), and

$\mathbf{x}_{n_t} = \begin{bmatrix} x_{n_t}^1 & x_{n_t}^2 & \cdots & x_{n_t}^P \end{bmatrix}^T$ are P parallel antenna codes.

In equation (2), the factors of the channel gain matrix are zero mean value and unit-distributed double-Gaussian random variable, and the factor of the noise vector is an independent, identically distributed Gaussian random variable.

In Non-Patent Document 5, a V-BLAST detecting method is proposed for use in the MIMO-OFDM-CDM system, however, this method has the problem system capacity is lost. Recently, a MIMO detecting method based on sphere decoding has been investigated in document R. wang, G. B. Giannakis, Approaching MIMO Channel Capacity with Reduced Complexity Soft Sphere Decoding, WCNC 2004.

The present invention proposes to apply a MIMO detecting method based on sphere decoding, to the MIMO-OFDM-CDM system, and to search the transmit signal within a spherical range having a fixed radius and centered around the receive signal. With this system framework, it is possible to obtain sub-optimum channel capacity. If the spherical signal is searched, the fading coefficient of each subcarrier must be known, in order to obtain a channel transfer matrix. The MIMO-OFDM-CDM system transmits a pilot sequence, and the pilot signal is estimated at the receiving side to carry out AGC, code synchronization and channel estimation, etc.

Non-Patent Document 5 researches only the system in the case of a single user and a fixed rate. In the present invention, before carrying out antenna multiplexing in S/P section T105, a spreading sequence for distributing a single orthogonal variable spreading factor to each user is used to spread the information encoded stream to spreading section T104. Thus, different data streams are subjected to a different multiple of dispersions, i.e., after low-speed code streams are dispersed in long codes, and high-speed code streams are dispersed in short codes, they are transmitted at the same chip rate (the dotted portion in FIG.3), which is similar to the SF-CDMA scheme. Spreading is carried out before the code stream, to enable the system to support multiple users and variable rates, and CDM spreading is carried out for each antenna after multiplexing to disperse a data code over OFDM subcarriers, thus providing different advantages.

Although OVSF spreading provides an advantage of enabling MIMO-OFDM-CDM system to support variable rate multi-media activities, it also has a disadvantage that its application is condition-constrained. Since the codes to be distributed to the users must be orthogonal, supporting activities of different rates makes code blockage more likely. In order to solve this code blockage problem, it is necessary to redistribute codes so that a new call can be supported. The code distributing apparatus used by the system contains four modules: storage section 101, comparing section 102, computing section 103 and distributing section 104, as shown in FIG.3.

Storage section 101 stores the system code tree in an optimal state, as will be described later. Here, the code tree refers to is a tree configuration in which spreading codes and spreading factors are associated hierarchically.

Upon receiving a new call, comparing section 102 determines whether the system can accept the new call, based on the state of the code tree stored in storage section 101, and the rate t required by the new call. If the system cannot accept the new call, the state of the code tree is maintained and computing section 103 is not set off, whereas, if the system can accept the new call, computing section 103 is set off.

Computing section 103 performs computation based on the state of the code tree stored in storage section 101 and the rate t required by the new call, and sends the computation result to distributing section 104.

Based on the computation result from computing section 103, distribution section 104 distributes appropriate code to the new call, and, if necessary, modifies the distributed code so that the system code tree is in an optimal state, and stores the modified code tree in storage section 101. In other words, distributing section 104 modifies a random sequence, representing codes occupied by distribution and codes yet to be distributed and therefore unoccupied, such that the sequence is in an optimal state where the occupied codes and the unoccupied codes are split. The code distribution method will be described later.

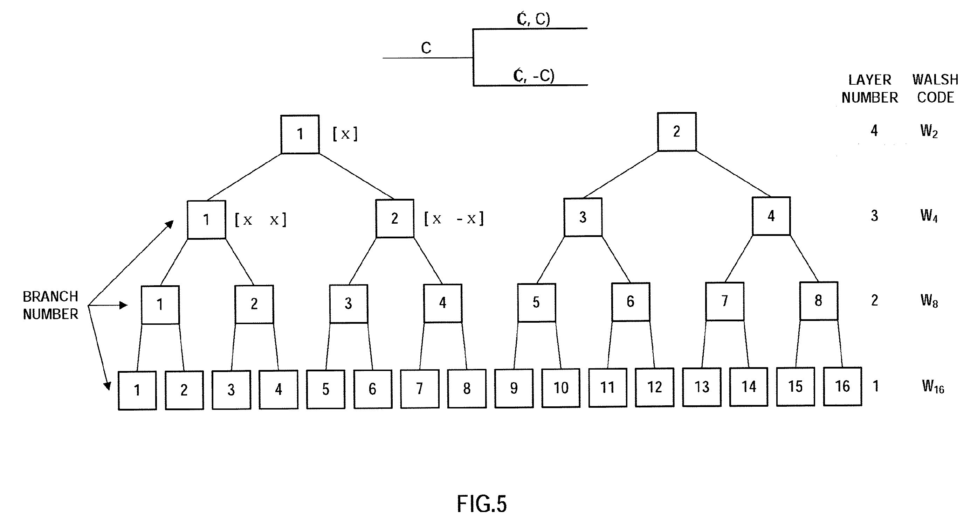

Next, first, the principle of code distribution in the OVSF spreading system will be analyzed. According to the principle, an orthogonal variable spreading factor (OVSF) of a length N is distributed to each user, and spreading is carried out for all data codes having a duration T (i.e. data rate R = 1/T). The OVSF orthogonal spreading code is generated from the Walsh code and can be shown by the code tree of FIG.5.

With the method of describing the code tree using the topology notation method, the codes of the first layer are observed from left to right, and if they are still available for distribution, they are denoted by X (Thit Min, Kai, Yeung (Sunny) Siu, Dynamic Assignment of OVSF codes in W-CDMA, IEEE JSAC, 2000, 18 (8) : 1429-1440). If the above codes are occupied, they are denoted by $\ulcorner$1] of their capacity. Also, if the mother code is occupied and therefore not available, it is observed how many sub-codes (here, K) of the first layer are made unavailable by the mother code. The K codes of the first layer are denoted by "K." If the topology notation method of the code tree is observed, it will be understood that all the numeric symbol parts are on the right side of the symbol sequence. Contrary to this, X's are on the left side of the symbol sequence. In other words, the occupied codes are concentrated on the right side of the code tree. This is referred to as the optimal state of the code tree.

The present invention proposes an extended topology notation method for the optimal state of the code tree. Since all unoccupied numeric symbols are on the left side, they are recorded as one set of numeric symbols only. The first numeric symbol in the symbol sequence is the X number (in other words, the excess capacity) in the topology notation method, while the other numeric symbols are the numbers of the other numeric symbols other than X, in the topology notation method (to maintain the identical order of these sequences). If the code tree is recorded using the E-t notation method, it is sufficient to record only two sets of numeric symbol sequences for the code tree recorded in the E-t notation method, and the distribution condition of the codes in the first layer. There are cases when the E-T notation method cannot be directly used, however, since it has the optimal state performance it may be considered as satisfying the optimal state by replacing the code numbers. This is referred to as pseudo-optimal state.

With the E-t notation method, the sequence is assumed to be $(S, a_1, a_2, \cdots, ak)$, its code tree satisfies the (pseudo) optimal state, and the system capacity is $2^n$. In this sequence, all numeric symbols other than the first numeric symbol (excess capacity) have the property that i is $q \leq i$ and satisfies $a_q + \cdots + a_i = 2^m$ if $2^m < 2^n$ and $a_q = 2^{m1} < 2^m$, and $2^m | a_1 + a_2 + \cdots + a_{q-1}$ exists.

FIG.5 shows a code tree. The OVSF codes in a lower layer are generated by the codes in an upper layer and are described by a specific layer number and branch number for each code, with the number of layers being counted from bottom to top, beginning from 1. As shown in FIG. 5, the two codes of layer 3 are generated by the mother code in layer 4. In FIG.5, "X" is a binary code sequence, and "-X" is its reverse. The branch numbers of the codes in the respective layers are counted from left to right. If the codes in the first layer support data of rate R, the rate supported by the codes in M layer is $2^{(M-1)}R$ [bps] . What has been defined as "maximum data rate to be supported Nmax = total number of codes on the first layer" represents the total capacity of the system. The excess capacity of the system is obtained by deducing the capacity sum of the occupied codes from the total capacity. When Nmax is determined, the number of layers for the code tree is also determined, and their respective codes can be identified as "code = (layer number, branch number)".

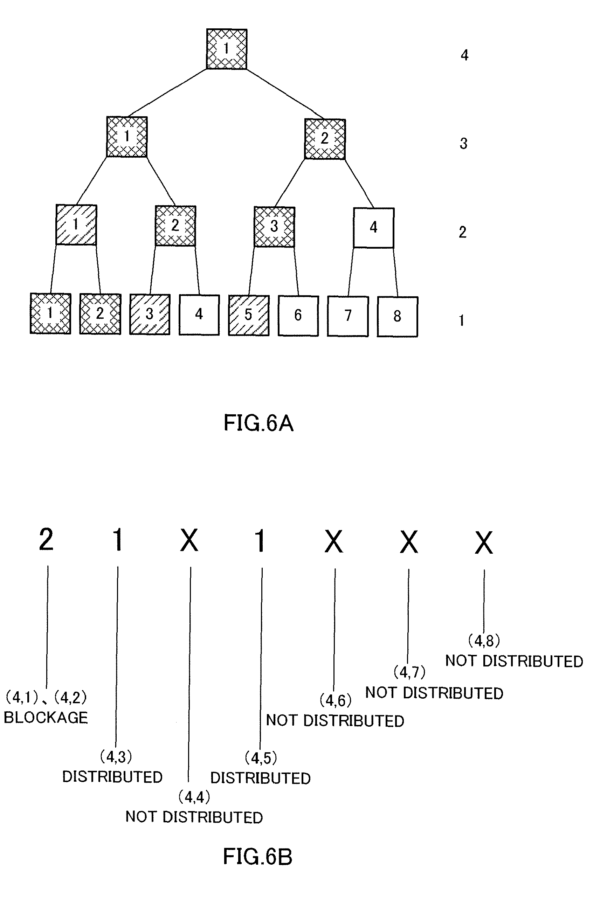

One branch is a perfect binary subtree of a code tree and the uppermost code of the code tree (subtree) is referred to as the root code of the above-mentioned code tree (subtree). As shown in FIG.6, (4, 1) is the root code of the entire code tree, and (3, 1) is the root code of one branch (subtree). The codes included in this branch are (2,1), (2,2), (1,1), (1,2), (1,3) and (1,4). The codes in a higher layer are circulated to become codes in all lower layers (sub-codes), and all the root codes which are connected to the codes on a lower layer are referred to as mother codes. If two codes have been directly generated from the same mother code in an upper layer, these codes are referred to as brother codes. All the sub-codes of (2, 4) in FIG. 6A are brother codes (1, 7) and (1,8), all the mother codes of (1,5) are (2, 3), (3, 2) and (4, 1). In FIG.6A, (1,1), (1,2), (2,2), (2,3), (3,1), (3,2) and (4,1) are blocking codes, and (1,3), (1,5) and (2,1) are distributed codes.

The codes of the respective layers are orthogonal to each other, and except for the case when one of two codes in different layers is the mother code of the other one of the two codes, all codes are orthogonal to each other. When one code is occupied to make all codes be orthogonal to each other in pair, its mother code and sub-codes become unusable. FIG.6A and FIG.6B are views that show code blockage. When codes (2,1), (1,3) and (1,5) are distributed, the excess volume becomes $(2^{(4-1)} - 2^{(2-1)} - 2^{(1-1)} - 2^{(1-1)}) \times R = 4R$ [bps], i.e., the system can support data of rate 4R [bps]. However, since codes (4,1), (3,1), (3,2), (2,2) and (2,3) are blocked by their sub-codes, and codes (1,1) and (1,2) are blocked by their mother code, the system is in a blocked state.

When the system is in a code blockage state, the codes must be re-distributed to support a new call. As shown in FIG.6A, if a new call of rate 4R [bps] is entered, the data to be originally supported at code (1, 5) is changed to code (1, 4), thereby making it possible to support the new call at code (3,2). Changing code (1, 5) to code (1,4) is referred to as code redistribution.

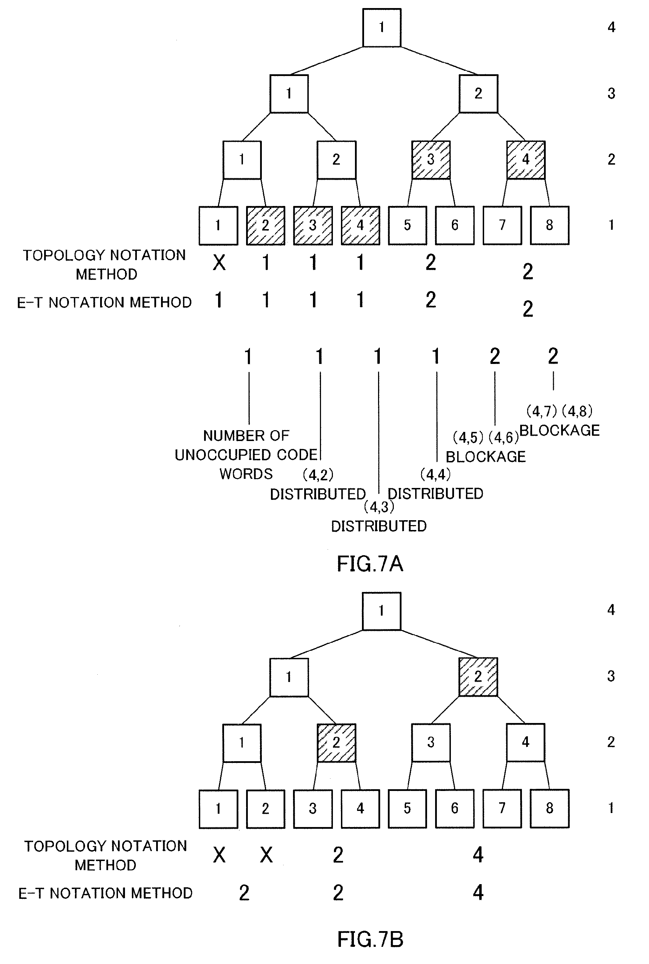

Non-Patent Document 6 describes a code tree by implementing a topology notation method, i.e., makes associations with a specific (unique) sequence in a random code tree configuration. In this method, the codes in the first layer are consecutively observed from left to right and if these codes are still available for distribution, they are shown by X, if these codes are occupied, they are shown by 1 of their capacity, and if they are rendered unusable by their mother code, it is observed how many sub-codes (here, K) in the first layer are rendered unusable by the above-mentioned mother codes. This K number of codes in the first layer are shown by K. The topology notation method for FIG.6A (occupied codes are shown in black) is shown in FIG.6B. Also, the number of X's shows the excess capacity of the system which has not yet been distributed. In the topology notation method for the code tree, all the numeric symbol parts are on the right side of the sequence. In other words, the occupied codes are concentrated on the right side of the code tree, and the state that X is only on the left side of the sequence is referred to as the optimal state of the code tree. FIG.7A and FIG.7B show two types of optimal states, and using the topology notation method, FIG.7A is respectively denoted as X11122, and FIG. 7B is denoted as XX24.

The present invention proposes, for the optimal state of the code tree, an extended topology (E-t) notation method, which is extended from the topology notation method. Since all the unoccupied codes are on the left side, they can be recorded by only one set of numeric symbols. The first numeric symbol in the sequence is the X number in the topology notation method (i.e., the excess capacity), and the rest of the numeric symbols are the numbers of numeric symbols other than X in the topology notation method (to maintain the identical order of the sequences). The E-t notation method (111122) will be concretely described as shown in the lower half of FIG. 7A. The first "1" shows the number of unoccupied codes, the second, the third and the fourth "1" show that codes (4,2), (4,3) and (4,4) have been distributed. The fifth and sixth "2" show that (4,5), (4,6), (4,7) and (4,8) are blocked. Similarly, the E-t notation method of the code tree shown in FIG.7B is shown as (224).

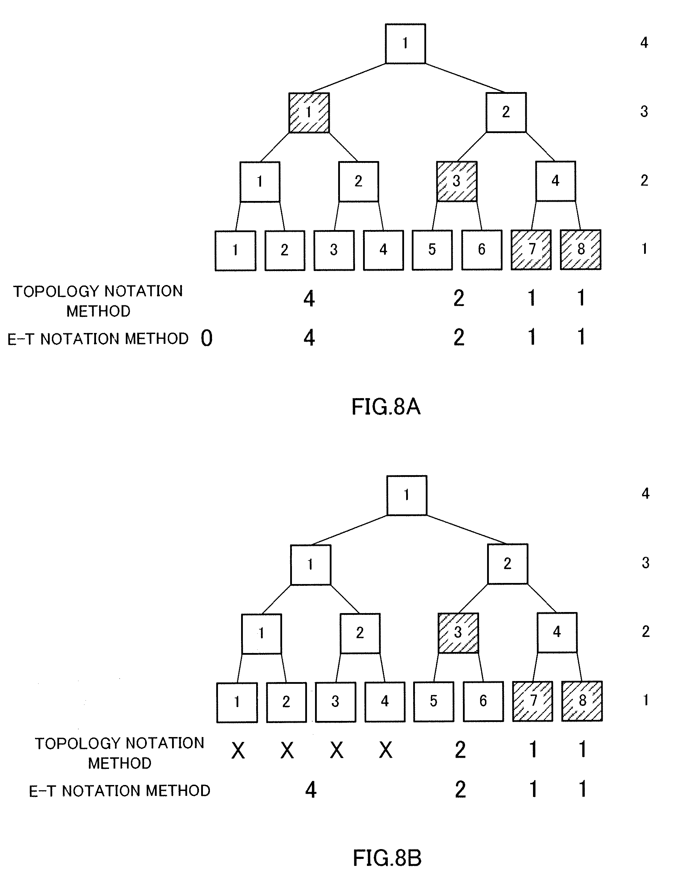

If the system excess capacity is "0", "0" is entered before the sequence in the E-t notation method, and the code tree is described by 04211, according to the E-t notation method, as shown in FIG.8A. In FIG. 8B, the E-t notation method is described by 4211.

To sum up, the E-t notation method first creates the optimal state of the code tree. Then, the codes of the first layer in the code tree are consecutively observed from left to right, and if the codes are still available for distribution, they are denoted by X, if the codes are occupied, they are denoted by 1 of their capacity, and if they are rendered unusable by their mother code, it is observed how many sub-codes of the first layer (here, K) are rendered unusable by their mother code. The K number of codes of the first layer are shown by K (up to here, the topology notation method is used). Finally, the above state is recorded by one set of numeric symbols, the first numeric symbol in the sequence is the number of X's, and the other numeric symbols show that the codes are occupied or blocked (extended topology notation method).

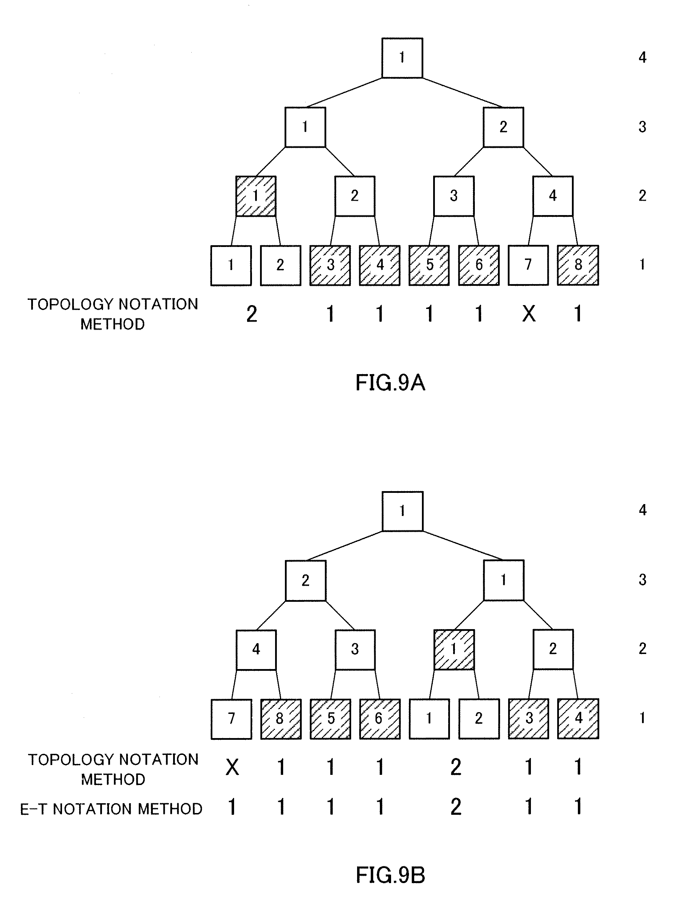

Recording of the code tree state using the E-t notation method requires a sequence that records the state of the code tree using the E-t notation method and a sequence that records the distribution condition of the codes of the first layer. FIG.9A shows a pseudo-optimal state, and FIG.9B shows the optimal state corresponding to FIG.9A. As shown in FIG.9B, the state of the code tree is recorded as (1111211) (each numeric symbol shows the capacity of the code), and the distribution condition of the codes of the first layer is 78561234 (each numeric symbol shows the code number word).

There are cases that code trees cannot be described by the direct E-t notation method, but they have the optimal state characteristic. Also, it may be construed that the optimal state is satisfied by replacing the code number (referred to as pseudo-optimal state). As shown in FIG.9A, when the above state is recorded, the numbers of the codes of the first layer are 12345678, and the corresponding topology notation method is 21111X1. In other words, in FIG.9A, this becomes a sequence in which the relationships in the code tree showing the occupied codes and the unoccupied codes are maintained. If the condition of the code tree is shown as in FIG.9B, since the numbers of the codes of the first layer are recorded as 78561234 and the corresponding topology notation method becomes X111211, this can be recorded as (1111211) in the E-t notation method. The state of FIG.9A is referred to as the pseudo-optimal state.

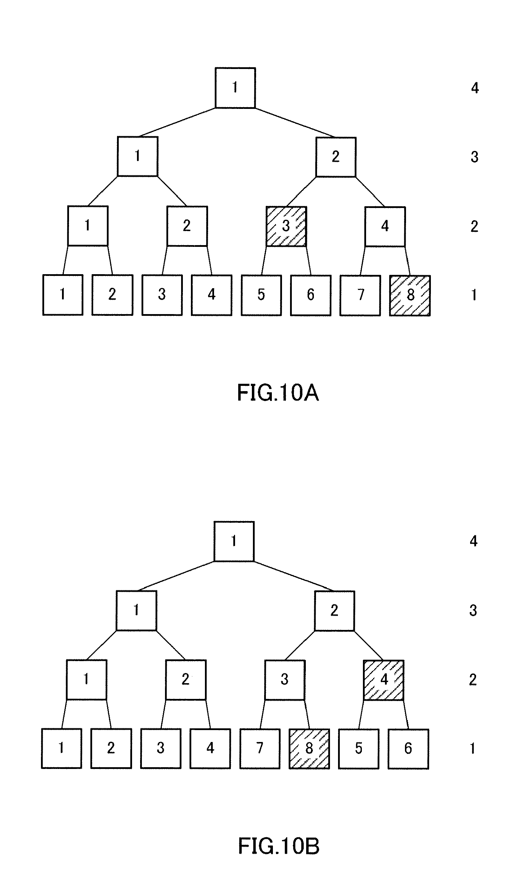

The above-described process is the exchange of code numbers, and since the external characteristics of two codes are perfectly similar and the codes are internally orthogonal to each other, the exchange of numbers does not influence in any way their external and inner characteristics. When the code numbers are replaced, the order of the recorded sequence must also be changed accordingly. It is irrelevant whether the two codes to be replaced are occupied or not, however, they must be brother codes. If the two codes to be replaced are not in the first layer (at this time, the numbers in two subtrees are replaced), the state of the codes in the first layer, which have been recorded and which correspond to these codes is entirely replaced based on the original order, and the sequence which records the state of the code tree may be replaced in a similar way. For instance, as shown in FIG.10A, in (XXXX2X1) and 12345678, (2,3) is replaced with (2,4), and the E-t recorded sequence becomes (512) and 12347856.

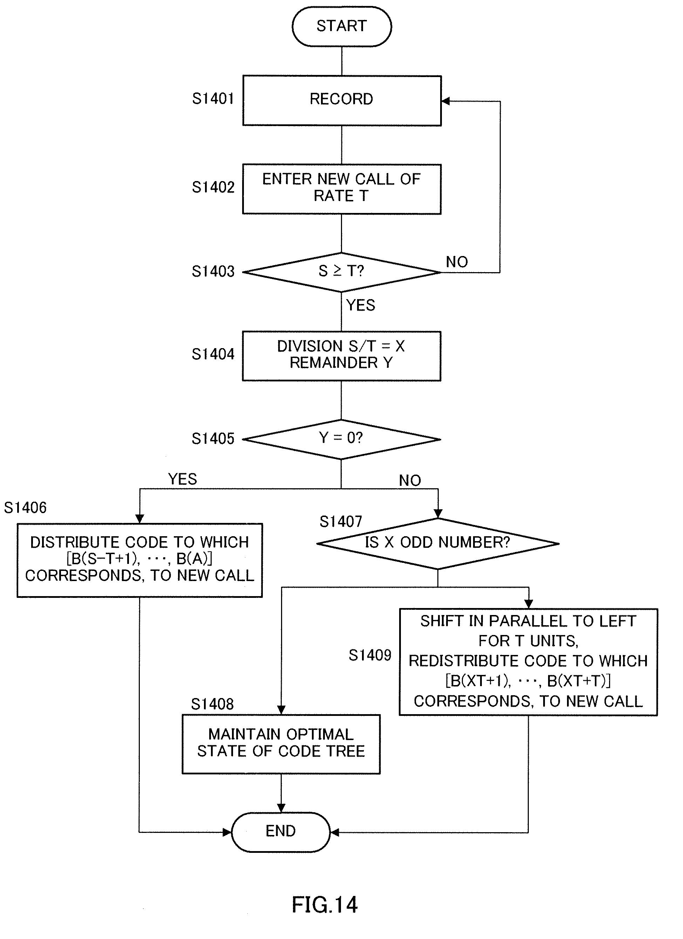

The present invention provides a dynamic code distribution method, based on the code tree optimal state and the E-t notation method. If the system has the capacity to accept a new call, a code is distributed to the new call, and the optimal state of the code tree is maintained. FIG.14 is a flow chart showing a code distribution method according to the present invention.

Twosetsofdata"S, $a_1$, $a_2$, $\cdots$ $a_k$" and "b1, b2, $\cdots$ " are recorded (Step S1401). Here, "S, $a_1$, $a_2$, $\cdots$ $a_k$" shows the state of the entire code tree, "S" is the system excess capacity, $a_i \in \{a_1, a_2, \cdots a_k\}$ is the capacity of occupied codes, and "b1, b2, $\cdots$ " are the numbers of the codes in the first layer of the code tree.

When a new call of rate t is received (Step S1402), S and t are compared (Step S1403), and if S < t ("NO" in Step S1403), the new call is canceled because the system capacity is insufficient. If S $\geq$ t ("YES" in step S1403), the system can support the new call. Next, the following operations are performed.

In Step S1404, the division operation is performed and S/t = x, with remainder y, in other words, S = t $\times$ x + y, and $0 \leq y < t$.

In Step S1405, the remainder y is determined. If y = 0 ("YES" in Step S105), specifically, since the code tree of the first layer has an excess capacity of a multiple of integer x of the new call, the code to which the number ($b_{S-t+1}$ $\cdots$ $b_s$) corresponds is distributed to the new call.

If $y \neq 0$ ("NO" in Step S1405), X is determined in Step S1406.

If x is an odd number ("YES" in Step S1407), since the number of redistributions of the codes in the first layer at this time is an odd number, a code to which number ($b_{S-t-y+1}$, $\cdots$, $b_{S-y}$) corresponds is distributed to the new call, and in order to maintain the optimal state of the code tree (Step S1408), the code number to which the new call and the previous t number correspond, is modified. Specifically, the code to which ($b_{S-t-y+1}$, $\cdots$, $b_{S-y}$) corresponds is distributed to the new call, and t is replaced for the brother code and the code number.

On the other hand, if x is an even number ("NO" in Step S1407), the number of distributions of the code in the first layer at this time is an even number. Since suffix p exists, according to the property of the E-t notation method to be described later, $y + a_1 + a_2 + \cdots + a_p = t$, and if the number to which $a_i$ occupied code corresponds is $m_i$, i = $1 \cdots p$ and the code to be redistributed to $a_i$ is $m'_i$. Here, assuming $m_i$ = bbp, then $m'_i = b_{p-t}$, and assuming $m_i = (b_p, b_{p+1} \cdots)$, then $m'_i = (b_{p-t}, b_{p-t+1} \cdots)$. Inotherwords, codes $a_1$, $a_2$, $\cdots$, akwere shiftedinparallel to the left for t units. Finally, it is understood that a code to which the number $b_{xt+1}$, $\cdots$ $b_{xt+t}$ of the t code in the first layer corresponds is distributed to the new call (Step S1409). Specifically, assuming $y + a_1 + a_2 + \cdots + a_p = t$, first, the codes $a_1$, $a_2$, $\cdots$ are redistributed, in other words, are shifted to the left in parallel for t units, and the code to which [b(xt+1), $\cdots$, b(xt+t)] corresponds is redistributed to the new call.

The system maintains the (pseudo) optimal state even if the above operation is performed, and in this case, if a new call is entered, code distribution is very easily performed and the amount of codes to be re-distributed is low. The recording conditions of the code tree, with respect to the four-layer code tree are 512 and 5111, and the code is redistributed only in the case a code of rate 2 is entered.

More concretely, in the E-t notation method, assuming that the sequence is (S, $a_1$, $a_2$, $\cdots$, $a_k$), its code tree is in an optimal state, and if the system capacity is $2^n$, all the numeric symbols other than the first numeric symbol in the sequence have the property that they satisfy the following condition ($2^m < 2^n$), and if in the sequence $a_q = 2^{m1} < 2^m$ and $2^m|a_1 + a_2 + \cdots + a_{q-1}$ exists, i is q $\leq$ i and satisfies aq+ $\cdots$ + $a_i = 2^m$. This property is demonstrated as follows.

The capacity of all codes in layer (m + 1) is $2^m$, and since $a_q < 2^m$, the mother code of $a_q$ with one capacity of $2^m$ can be found, and consequently, since among the sub-codes of the above mother code necessarily exist occupied sub-codes, and the capacity of the occupied sub-codes is 2m, the above-mentioned property is demonstrated.

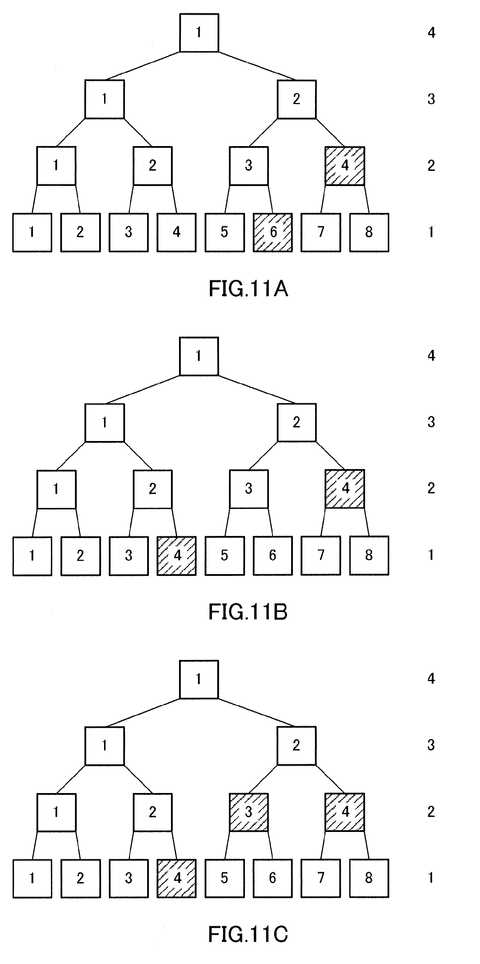

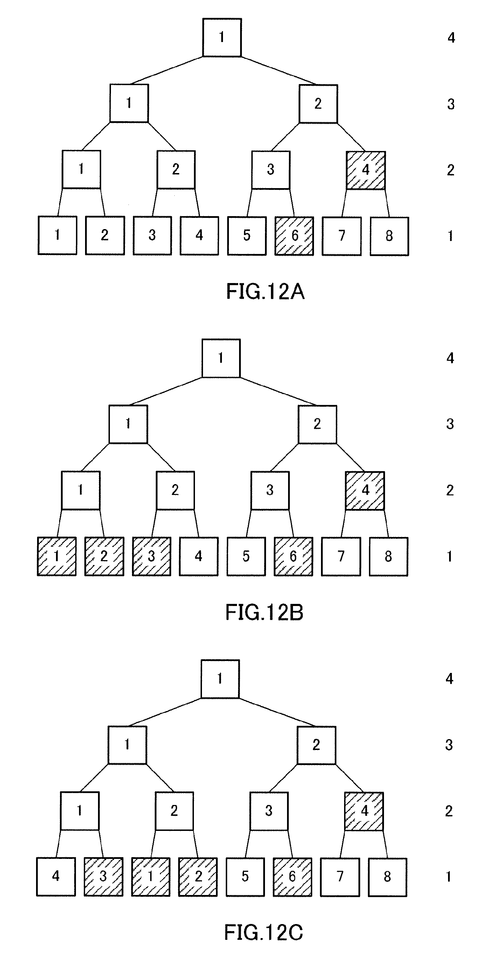

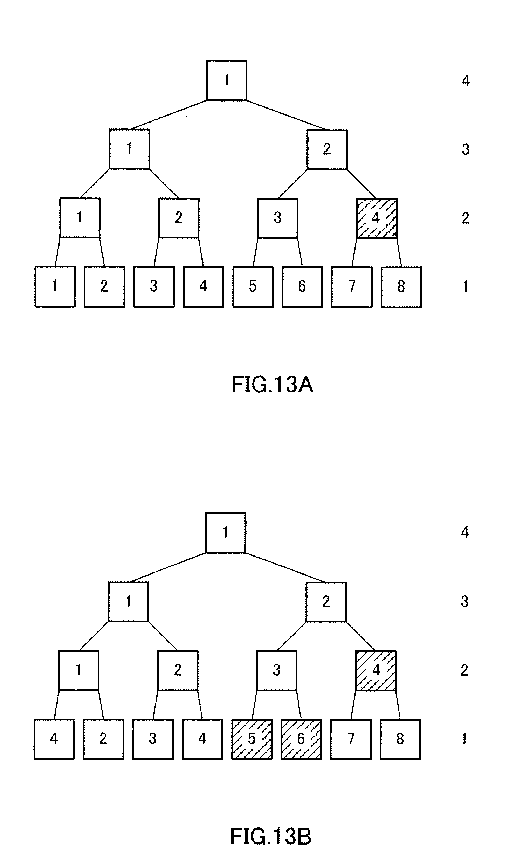

Next, an example for each condition will be shown. FIG. 11A to FIG. 11C are views showing a first example of code distribution. FIG.12A to FIG.12C are views showing a second example of code distribution. FIG.13A and FIG.13B are views showing a third example of code distribution.

In FIG.11A to FIG.11C, by moving from the state in FIG.11A, the state becomes as shown in FIG.11B, and by performing code distribution from the state of FIG. 11B, the state becomes as shown in FIG.11C. In the first example from FIG.11A to FIG.11C, the code tree notation is 512 (i.e., S = 5 and the numbers to which codes $a_1$, $a_2$ = 1, 2 correspond are $b_1$, $b_2$, $\cdots$, $b_8$ = 1, 2, $\cdots$, 8), and if a new call of rate 2(t) is present in the system, the 5/2 = 2 (x) division is performed, and since the remainder is 1 (y), $y \neq 0$ and x is an even number. Since 1 (y) + $a_1$ = 2(t) is obtained as a result of the computation, the lower suffix p = 1, and since the number to which code $a_1$ corresponds is 6 ($m_1$) = ($b_1$, $b_{p+1}$, $\cdots$, $b_{p+5}$), 4($m'_1$) = ($b_{1-2}$, $b_{1-2+1}$, $\cdots$, $b_{1-2+5}$). In other words, the above code is obtained by parallel shifting of as many as 2 (t) codes to the left. Finally, the code to which ($b_{2\times2+1}$, $b_{2\times2+2}$) = ($b_5$, $b_6$) corresponds is distributed to the new call. The code distribution operation is shown in FIG.8.

In FIG.12A to FIG.12C, by performing code distribution from the state shown in FIG.12A, the state becomes as shown in FIG. 12B, and by replacing code numbers from the state shown in FIG.12B, the state becomes as shown in FIG.12C. Similarly, in the second example of FIG.12A to FIG.12C, the code tree notation is 512, S = 5, and the numbers to which codes $a_1$, $a_2$ = 1,2 correspond become $b_1$, $b_2$, $\cdots$, $b_8$ = 1, 2, $\cdots$, 8, and if a new call of rate 3(t) is present in the system, 5/3 = 1(x) division is performed, and since the remainder is 2 (y), $y \neq 0$ and x becomes an odd number. According to the above computation, the code whose number is ($b_{5-3-2+1}$, $b_{5-3-2+2}$, $b_{5-2}$ = $b_1$, $b_2$, $b_3$) is distributed to the new call, and the brother codes are replaced for the code numbers so that the code tree is in an optimal state. The code distribution operation is shown in FIG.12A to FIG.12C.

Similarly, in FIG. 13A and FIG.13B, by performing the code distribution from the state shown in FIG.13A, the state becomes as shown in FIG.13B. In the third example of FIG.13A and FIG.13B, the code tree notation is 62, S-6, the number to which $a_1$ = 2 code corresponds is $b_1$, $b_2$, $\cdots$, $b_8$ = 1, 2, $\cdots$, 8, and if a new call of rate 2(t) exists in the system, the division 6/2 = 3(x) is performed, and since the remainder is 0 (y), y = 0. From the above computation, redistribution is not required, and the code whose number is ($b_{6-2+1}$, $b_6$ = $b_5$, $b_6$) is directly distributed to the new call. The code distribution operation is shown in FIG.10.

If the system capacity is 4R, according to the Poisson process of intensity $\lambda$, the new call is compliant with a negative exponential distribution with parameter $\mu$, at the time an activity is performed in the system. If the activity load is $\lambda/\mu$ = 5, the proposed dynamic code distribution method does not require redistribution, and it is understood from the above computation that, compared to the above, the computation method described in Non-Patent Document 5 requires 50 redistributions. Compared to the conventional method, the number of redistributions in the code distribution method of the present invention is very low, which makes it possible to reduce system cost.

Thus, according to the embodiment of the present invention, the load on the system can be reduced by carrying out a dynamic code distribution method which has a low complexity level and largely reduces the number of retransmissions, thereby addressing the code blockage problem which occurs when the system supports variable multi-media applications. Also, according to the present embodiment, the use of the OVSF spreading renders the MIMO-OFDM-CDM system capable of multi-user access and variable rate multi-media information transmission. Also, according to the present embodiment, the system can achieve suboptimal capacity using sphere decoding on the receiving-side. Also, according to the present embodiment, it is possible to provide a dynamic code distribution computation method with a lower degree of complexity than the general method, based on the optimal state of the code tree and the E-t notation method.

A description has been given of a typical embodiment, however, the code distribution method of the present invention can be applied to all OVSF spreading communication systems, except for the MIMO-OFDM-CDM system. Specifically, the present invention can be modified, altered and amended, albeit the above-described embodiment, without departing from the gist and spirit of the present invention.

Industrial Applicability

The multi-rate radio communication apparatus and the code distribution method according to the present invention is suitable for use in MIMO-OFDM-CDM communication that supports multiple user access and variable rate multi-media information transmission.

**Claims**

1. A multi-rate radio communication apparatus comprising:

    a distributing section that modifies a sequence which maintains associations showing occupied codes and unoccupied codes, from codes which are hierarchically associated with each spreading factor in a code tree having a tree configuration, into a sequence in which the occupied codes and the unoccupied codes are split, to obtain an optimal state;
    a storage section that stores the sequence of the optimal state; and
    a spreading section that performs spreading processing on transmit data to a new call using a code distributed to the new call, based on the sequence of the optimal state which is stored in the storage section.

2. The multi-rate radio communication apparatus of claim 1, wherein the distributing section modifies the sequence such that said sequence is in an optimal state where, in accordance with topology notation method, numeric symbols denoting the number of occupied codes are concentrated on the right side of the code tree, and X's which are symbols that denote the unoccupied codes are concentrated on the left side of the code tree.

3. The multi-rate radio communication apparatus of claim 2, wherein the distributing section modifies the sequence into a sequence to which a numerical value denoting the number of the unoccupied codes is attached to its left side end.

4. The multi-rate radio communication apparatus of claim 1, wherein the spreading section performs spreading processing using a distributed code, in accordance with orthogonal-variable-spreading-factor spreading scheme.

5. The multi-rate radio communication apparatus of claim 1, wherein the distributing section modifies the symbols denoting the codes which are hierarchically associated to each spreading factor in a Walsh code tree which is the above-mentioned code tree, to obtain the optimal state.

6. A code distribution method comprising:

a distributing step of modifying a sequence which maintains associations showing occupied codes and unoccupied codes, from codes which are hierarchically associated with each spreading factor in a code tree having a tree configuration, into a sequence in which the occupied codes and the unoccupied codes are split, to obtain an optimal state;
a storage step of storing the sequence of the optimal state; and
a distributing step of distributing a code to a new call, based on the sequence of the stored optimal state.

7. The code distribution method of claim 6, wherein the sequence in which, in accordance with topology notation method, numeric symbols denoting the number of occupied codes are concentrated on the right side of the code tree, and X's which are symbols that denote the unoccupied codes are concentrated on the left side of the code tree, is modified to obtain the optimal state.

PRIOR ART

FIG.1

PRIOR ART

FIG.2

R111 — RX 1

R111 — RX Nr

R112 — TIME FREQUENCY SYNCHRONI-ZATION

R110 — CP REMOVAL

R110 — CP REMOVAL

R109 — DFT

R109 — DFT

R108 — REVERSE INTER-WEAVING

R108 — REVERSE INTER-WEAVING

R113 — V-BLAST RECEIVER

R104 — DESPREADING

R103 — DEMODULATION

R102 — REVERSE INTER-WEAVING

R101 — DECODING

INFORMATION STREAM

FIG.3

FIG.4

EP 1 814 252 A1

FIG.5

FIG.6A

2    1    X    1    X    X    X

(4,1)、(4,2)
BLOCKAGE

(4,3)
DISTRIBUTED

(4,4)
NOT DISTRIBUTED

(4,5)
DISTRIBUTED

(4,6)
NOT DISTRIBUTED

(4,7)
NOT DISTRIBUTED

(4,8)
NOT DISTRIBUTED

FIG.6B

FIG.7A

FIG.7B

FIG.8A

FIG.8B

FIG.9A

FIG.9B

FIG.10A

FIG.10B

FIG.11A

FIG.11B

FIG.11C

FIG.12A

FIG.12B

FIG.12C

FIG.13A

FIG.13B

START

S1401 — RECORD

S1402 — ENTER NEW CALL OF RATE T

S1403 — $S \geq T$?  NO

YES

S1404 — DIVISION $S/T = X$ REMAINDER $Y$

S1405 — $Y = 0$?

YES

NO

S1406 — DISTRIBUTE CODE TO WHICH [B(S−T+1), ···, B(A)] CORRESPONDS, TO NEW CALL

S1407 — IS X ODD NUMBER?

S1409 — SHIFT IN PARALLEL TO LEFT FOR T UNITS, REDISTRIBUTE CODE TO WHICH [B(XT+1), ···, B(XT+T)] CORRESPONDS, TO NEW CALL

S1408 — MAINTAIN OPTIMAL STATE OF CODE TREE

END

FIG.14

<div align="center">

**INTERNATIONAL SEARCH REPORT**

</div>

| | International application No. |
|---|---|
| | PCT/JP2005/021669 |

**A. CLASSIFICATION OF SUBJECT MATTER**
*H04J13/00*(2006.01)

According to International Patent Classification (IPC) or to both national classification and IPC

**B. FIELDS SEARCHED**

Minimum documentation searched (classification system followed by classification symbols)
*H04J13/00*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)
    IEEE

**C. DOCUMENTS CONSIDERED TO BE RELEVANT**

| Category* | Citation of document, with indication, where appropriate, of the relevant passages | Relevant to claim No. |
|---|---|---|
| X<br>A | Thit Minn, Kai-Yeung Siu, Dynamic Assignment of Orthogonal Variable-Spreading-Factor Codes in W-CDMA, IEEE JOURNAL ON SELECTED AREAS IN COMMUNICATIONS, Vol.18, No.8, 2000.08, pages 1429 to 1440 | 1,2,4-7<br>3 |
| A | Yang Yang, Tak-Shing Peter Yum, Maximally Flexible Assignment of Orthogonal Variable Spreading Factor Codes for Multirate Traffic, IEEE TRANSACTIONS ON WIRELESS COMMUNICATIONS, Vol.3, No.3, 2004.05, pages 781 to 792 | 1-7 |
| A | JP 2004-129037 A  (Nippon Terekomu Kabushiki Kaisha), 22 April, 2004 (22.04.04), Full text; all drawings (Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 January, 2006 (24.01.06) | 07 February, 2006 (07.02.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2005/021669

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-514432 A (Telefonaktiebolaget LM Ericsson(publ)), 15 April, 2003 (15.04.03), Full text; all drawings & US 6876690 B1      & EP 1100215 A1 & WO 2001/035550 A1    & CN 1423865 A | 1-7 |
| A | JP 2002-528954 A (Telefonaktiebolaget LM Ericsson(publ)), 03 September, 2002 (03.09.02), Full text; all drawings & US 6163524 A       & EP 1123594 A1 & WO 2000/024146 A1 | 1-7 |
| A | JP 2003-46481 A (Matsushita Electric Industrial Co., Ltd.), 14 February, 2003 (14.02.03), Full text; all drawings & US 2004/0042386 A1    & EP 1317086 A1 & WO 2003/013038 A1    & CN 1471768 A | 1-7 |
| A | WO 2004/002011 A1 (QUALCOMM INC.), 31 December, 2003 (31.12.03), Full text; all drawings & US 2003/0235147 A1    & EP 1516441 A1 & JP 2005-5312219 A | 1-7 |
| A | WO 2004/010591 A2 (INTERDIGITAL TECHNOLOGY CORP.), 29 January, 2004 (29.01.04), Full text; all drawings & US 2004/0131008 A1    & EP 1527582 A2 & JP 2005-533455 A | 1-7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. J. FOSCHINI.** Layered Space-time Architecture for Wireless Communication in a Fading Environment when Using Multi-element Antennas. *Bell Labs Tech. J.,* 1996, vol. 1, 41-59
- **I. E. TELATAR.** Capacity of Multi-antenna Gaussian Channels. *Eur. Trans. Tel.,* November 1999, vol. 10 (6), 585-595
- **A. J. PAULARJ et al.** An Overview of MIMO Communications-A Key to Gigabit Wireless. *Proceedings of IEEE,* February 2004, vol. 92 (2), 198-218

- **S. KAISER.** OFDM code division multiplexing in fading channels. *IEEE trans. Comm.,* August 2002, vol. 50, 1266-1273
- **KILSIK HA ; K. B. LEE.** OFDM-CDM with V-BLAST Detection and Its Extension to MIMO Systems. *Proc. IEEE Vehicular Technology Conference 2003 Spring (VTC 2003S,* April 2003, vol. 1, 764-768
- **THIT MIN ; KAI ; YEUNG (SUNNY) SIU.** Dynamic Assignment of OVSF codes in W-CDMA. *IEEE JSAC,* 2000, vol. 18 (8), 1429-1440